# EUROPEAN PATENT APPLICATION

(11) **EP 4 286 239 A1**
(43) Date of publication of application: **06.12.2023**
(21) Application number: 21923025.7
(22) Date of filing: 30.09.2021
(51) Int. Cl.: B61F 5/30, F16F 1/40, F16F 15/04, F16F 15/08

(54) **PRIMARY SPRING**

(30) Priority: 01.02.2021 JP 2021014640
(71) Applicant: Nitta Chemical Industrial Products Co., Ltd., Osaka-shi, Osaka 556-0022 (JP)
(72) Inventor: KASHIHARA, Hiroki, Osaka-shi, Osaka 556-0022 (JP)
(74) Representative: Abel & Imray LLP
(86) International application number: PCT/JP2021/036099
(87) International publication number: WO 2022/163018

(57) **Abstract**

An object of the present invention is to provide an axle spring which has superior non-linear spring characteristics and which is capable of reducing a risk of adversely affecting durability.

An axle spring including a shaft section 6, an outer cylinder 2, and an elastic section 3 which is interposed between the shaft section 6 and the outer cylinder 2 and in which elastic body layers 4 and hard cylinders 5 are alternately concentrically laminated, wherein an annular elastic body support section 7 which extends outward in a radial direction is formed at a lower end of at least one of the shaft section 6 and the hard cylinders 5, the elastic body layer 4, which is in contact with an outer circumferential surface of the shaft section 6 or the hard cylinders 5 where the elastic body support section 7 is formed, is formed as far as the elastic body support section 7, and the elastic body support section 7 is configured such that an outer diameter of the elastic body support section 7 is set equal to or larger than a certain size or, when a load in the axial center direction is applied to the axle spring, a part of the load is applied to the elastic body support section 7.

## Description

### Technical Field

The present invention relates to an axle spring preferably used for a vehicle and, particularly, for a rolling stock.

### Background Art

For example, in a rolling stock, a configuration in which an axle spring is interposed between a bogie frame and an axle-side member in order to alleviate an impact during a vertical movement is known (refer to Figure 5 in Patent Literature 1). In terms of a specific configuration, as shown in Figure 6, a bogie 31 includes a bogie frame 32 which supports a car body, an axle 34 to which a pair of left and right wheels is fit, an axle box 35 which houses bearings that rotatably support the axle 34, and an axle spring 36 which is interposed between the bogie frame 32 and the axle box 35.

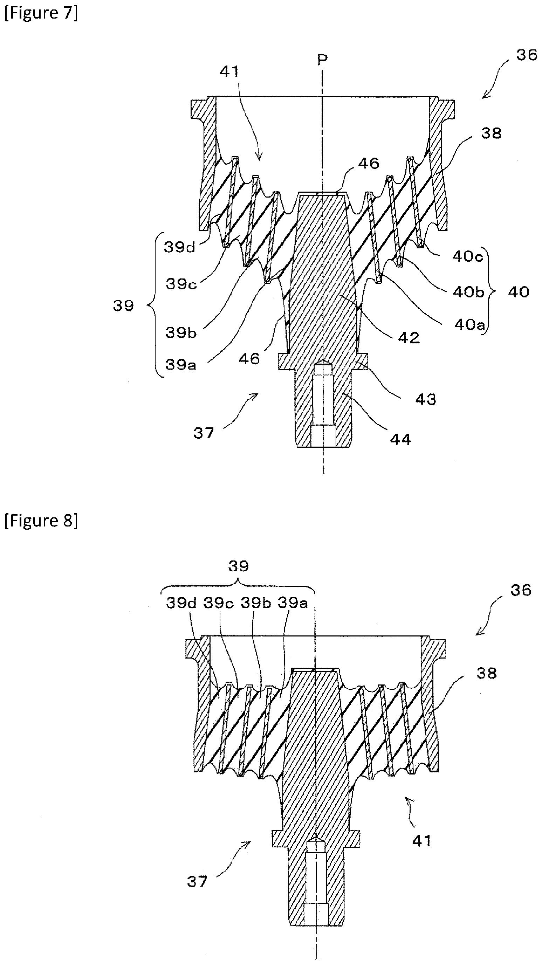

Figure 7 is a longitudinal sectional view of the conventional axle spring 36. The axle spring 36 includes a shaft core (main shaft) 37, an outer cylinder 38 which shares a same axial center P as the shaft core 37, and an elastic section 41 which is interposed between the shaft core 37 and the outer cylinder 38. The shaft core 37 has a shaft section 42 to which the elastic section 41 is fixed, a flange section 43 formed below the shaft section 42, and a shaft base 44 provided successively to the flange section 43. A recessed receiving section 45 to which the shaft base 44 of the axle spring 36 can be fitted is formed at both front and rear ends of the axle box 35. By fitting the shaft base 44 of the axle spring 36 into the receiving section 45 and fixing the shaft base 44 and then mounting the outer cylinder 38 to a side of the bogie frame 32, the axle spring 36 is incorporated into the bogie.

The elastic section 41 has a laminated elastic body structure in which a plurality of elastic body layers 39 (39a, 39b, 39c, and 39d) and a plurality of hard cylinders 40 (40a, 40b, and 40c) are alternately concentrically laminated around the axial center P. The elastic body layers 39a to 39d and the hard cylinders 40a to 40c are formed in a conical cylindrical shape of which a shape in a longitudinal sectional view is a truncated inverted V-shape. In addition, an outer circumferential surface of the shaft section 42 which the elastic body layer 39a comes into contact with and an inner circumferential surface of the outer cylinder 38 which the elastic body layer 39d comes into contact with are formed in a conical surface shape. Moreover, in the shaft core 37, a portion other than those to which the elastic section 41 is fixed is covered by an elastic body thin film 46 in order to protect the shaft core 37.

As described above, the elastic section 41 has an inclined laminated elastic body structure in which the elastic body layers 39 and the hard cylinders 40 are inclined with respect to the axial center P. In the structure, when a load is applied in a direction of the axial center P (up-down direction) of the axle spring 36, as shown in Figure 8, the elastic body layers 39 elastically deform, a height of the axle spring 36 changes, and a compressive load is applied to the elastic section 41 in addition to a shear load. The compressive load increases as a displacement amount of the height of the axle spring 36 increases and, accordingly, the axle spring 36 has non-linear spring characteristics. The non-linear spring characteristics of the axle spring 36 can be adjusted by changing an inclination angle of the elastic section 41.

### Citation List

### Patent Literature

Patent Literature 1: Japanese Patent Laid-Open No. 2003-40107

### Summary of Invention

### Technical Problem

However, in the axle spring configured as described above, when soft rubber is used as the elastic body layers so that favorable riding quality characteristics are exhibited when car body weight is light such as when the car is empty, it is difficult to produce non-linear spring characteristics which enable favorable riding quality characteristics to be similarly maintained when car body weight is heavy such as when the car is packed to capacity by simply adjusting the inclination angle of the elastic section.

In addition, the elastic body layers are only in contact with the shaft section, the hard cylinders, or the outer cylinder on both an inner side and an outer side in a radial direction and are not provided with a member which supports the elastic body layers in an axial center direction. Therefore, there is a possibility that a creep may occur in the elastic body layers with the use of the axle spring to cause riding quality characteristics to deteriorate or that separation may occur between the outer circumferential surface of the shaft section or the hard cylinders and the elastic body layers, thereby creating a risk of adversely affecting durability of the axle spring.

In consideration thereof, an object of the present invention is to provide an axle spring which has superior non-linear spring characteristics and which is capable of reducing a risk of adversely affecting durability.

### Solution to Problem

In order to solve the problem described above, an aspect of the present invention is an axle spring including a shaft core, an outer cylinder, and an elastic section interposed between the shaft core and the outer cylinder, wherein the elastic section has a laminated elastic body structure in which elastic body layers and hard cylinders are alternately concentrically laminated, the shaft core has a shaft section to which the elastic body layers are bonded, an annular elastic body support section which extends outward in a radial direction is formed at a lower end of at least one of the shaft section and the hard cylinders, and the elastic body support section has at least one of configurations (A) and (B) described below:
(A) A configuration in which an outer diameter of the elastic body support section is set equal to or larger than an opening diameter of a lower end of the hard cylinder or the outer cylinder to which the shaft section or the hard cylinder where the elastic body support section is formed faces on an outer side in the radial direction, and the elastic body layer, which is in contact with the outer circumferential surface of the shaft section or the hard cylinders where the elastic body support section is formed, is formed as far as the elastic body support section.
(B) A configuration in which the elastic body layer, which is in contact with the outer circumferential surface of the shaft section or the hard cylinders where the elastic body support section is formed, is formed as far as the elastic body support section and, when a load in an axial center direction is applied to the axle spring, a part of the load is applied to the elastic body support section.

In addition, a configuration may be adopted in which the elastic body support section and the elastic body layer in contact with the outer circumferential surface of the shaft section or the hard cylinders where the elastic body support section is formed are formed at least as far as a position of a perpendicular which passes a lower end of the hard cylinders or the outer cylinder in contact with the outer circumferential surface of the elastic body layer.

A configuration may be adopted in which an annular elastic body support section which extends outward in a radial direction is formed at lower ends of at least two elements facing to each other among the shaft section, the hard cylinders, and the outer cylinder, wherein an outer diameter of an elastic body support section with a smaller inner diameter among the elastic body support sections facing to each other is formed so as to be larger than an inner diameter of the elastic body support section with a larger inner diameter, and the elastic body layer is formed as far as at least a part of a space between the elastic body support sections facing to each other.

A configuration may be adopted in which an annular elastic body support section which extends outward in a radial direction is formed at a lower end of each of the shaft section, the hard cylinders, and the outer cylinder, wherein an outer diameter of an elastic body support section with a smaller inner diameter among the elastic body support sections facing to each other is formed so as to be larger than an inner diameter of the elastic body support section with a larger inner diameter, and the elastic body layer is formed as far as at least a part of a space between the elastic body support sections facing to each other.

A configuration may be adopted in which the elastic body layer in contact with the outer circumferential surface of the shaft section or the hard cylinders where the elastic body support section is formed satisfies a condition expressed as (D2/D1) ≥ 1, where D1 denotes a thickness of the elastic body layer in the radial direction and D2 denotes a thickness of the axle spring in the axial center direction at a lower end position of the hard cylinders or the outer cylinder in contact with the outer circumferential surface of the elastic body layer.

A configuration may be adopted in which the elastic body support section is formed so as to be capable of holding the elastic body layer when the shaft section or the hard cylinders where the elastic body support section is formed and the elastic body layer in contact with an outer circumferential surface of the shaft section or the hard cylinders are in a non-adhered state.

A configuration may be adopted in which the elastic body support section is formed so as to extend in a direction perpendicular to an axial center of the axle spring.

A configuration may be adopted in which a corner section, which is between the elastic body support section and the shaft section or the hard cylinders where the elastic body support section is formed, is formed so as to be curved.

### Advantageous Effects of Invention

With the axle spring according to an aspect of the present invention, since a configuration is adopted in which: an annular elastic body support section which extends outward in a radial direction is formed at a lower end of at least one of a shaft section and the hard cylinders; and an elastic body layer in contact with an outer circumferential surface of the shaft section or the hard cylinders where the elastic body support section is formed is supported by the elastic body support section, an axle spring which has superior non-linear spring characteristics and which is capable of reducing a risk of adversely affecting durability can be obtained.

### Brief Description of Drawings

[Figure 1] Figure 1 is a longitudinal sectional view showing an embodiment of an axle spring according to the present invention.
[Figure 2] Figure 2 is an enlarged view of a portion enclosed by a circle A in Figure 1.
[Figure 3] Figure 3 is a longitudinal sectional view showing a state where a load is applied to the axle spring shown in Figure 1.
[Figure 4] Figure 4 is a diagram showing a displacement amount of the axle spring according to the present invention and a change in load.
[Figure 5] Figure 5 is an enlarged view of a portion enclosed by a circle B in Figure 3.
[Figure 6] Figure 6 is a side view showing a conventional axle spring mounted to a bogie for a rolling stock.
[Figure 7] Figure 7 is a longitudinal sectional view showing a conventional axle spring.
[Figure 8] Figure 8 is a longitudinal sectional view showing a state where a load is applied to the axle spring shown in Figure 7.

### Description of Embodiment

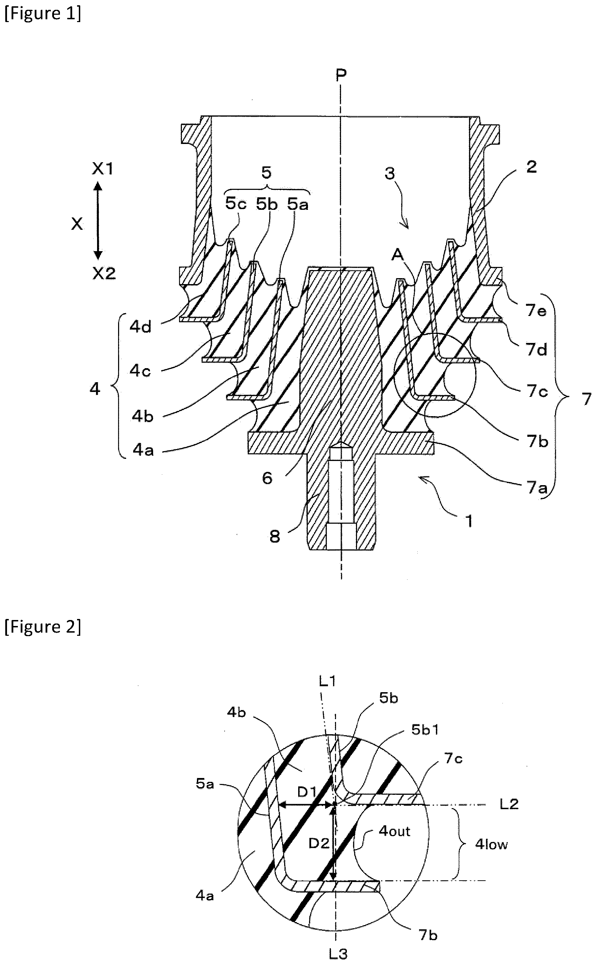

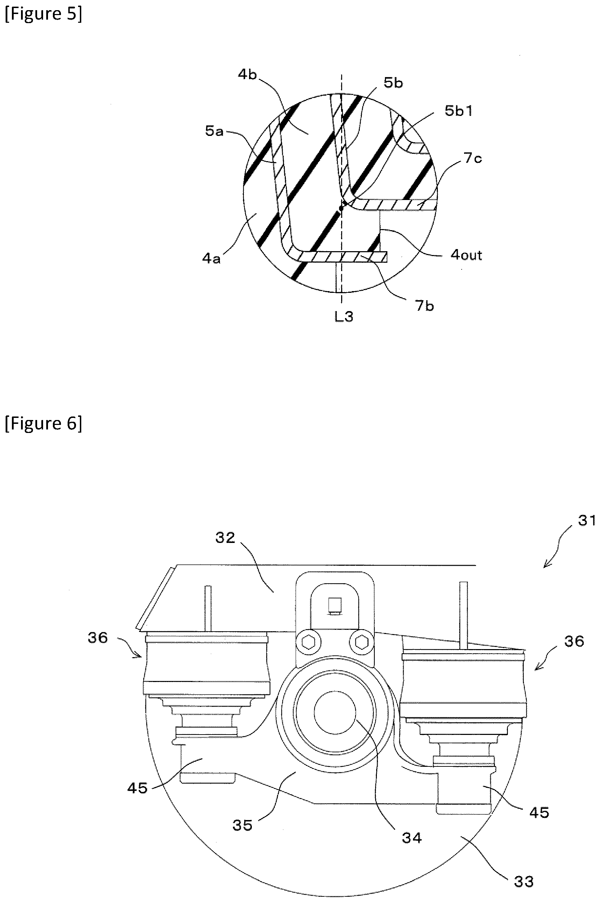

Hereinafter, an embodiment of the present invention will be described with reference to the drawings. An axle spring according to the present embodiment is used as an axle spring for a rolling stock and a type of usage of the axle spring is assumed to be similar to the conventional axle spring described with reference to Figure 6. In other words, the axle spring according to the present invention can be used in place of the axle spring 36 shown in Figure 6. Figure 1 is a longitudinal sectional view showing an embodiment of the axle spring according to the present invention.

As shown in Figure 1, the axle spring according to the present embodiment includes a shaft core 1, an outer cylinder 2, and an elastic section 3 interposed between the shaft core 1 and the outer cylinder 2. The elastic section 3 is configured as a laminated elastic body structure in which elastic body layers 4 and hard cylinders 5 are alternately laminated. The elastic body layers 4 are configured of rubber-like elastic bodies. The hard cylinders 5 are made of a hard material such as a metal or reinforced plastic. The shaft core 1, the elastic body layers 4, the hard cylinders 5, and the outer cylinder 2 all share a same axial center P. A direction of the axial center P coincides with a perpendicular direction. In Figure 1, an arrow X indicates an up-down direction, an X1 direction indicates an upward direction, and an arrow X2 direction indicates a downward direction.

The shaft core 1 is made of metal and has a shaft section 6 to which the elastic section 3 is fixed, a flange section formed at a lower end of the shaft section 6, and a shaft base 8 provided successively to a lower side of the flange section. The elastic section 3 has a laminated elastic body structure in which a plurality of elastic body layers 4a to 4d (hereinafter, a description of "elastic body layer 4" will be used when describing an elastic body layer in general) and a plurality of hard cylinders 5a to 5c (hereinafter, a description of "hard cylinder 5" will be used when describing a hard cylinder in general) are alternately concentrically laminated around the axial center P.

The hard cylinders 5a to 5c are formed in a conical cylindrical shape of which a shape in a longitudinal sectional view is a truncated inverted V-shape. In addition, an outer circumferential surface of an upper part of the shaft section 6 which the elastic body layer 4a comes into contact with and an inner circumferential surface of the outer cylinder 2 which the elastic body layer 4d comes into contact with are formed in a conical surface shape. Furthermore, in the present embodiment, annular elastic body support sections 7a to 7e (hereinafter, a description of "elastic body support section 7" will be used when describing an elastic body support section in general) which extend outward in a radial direction are formed at a lower end of each of the shaft section 6, the hard cylinders 5a to 5c, and the outer cylinder. The elastic body support section 7a also functions as a flange section of the shaft core 1. In the present embodiment, while the elastic body layer 4 is vulcanized and adhered to the outer cylinder 2, the hard cylinder 5, the shaft section 6, and the elastic body support section 7, the elastic body layer 4 is not limited to this method and may be adhered using an adhesive.

In the present embodiment, among adjacent elastic body support sections 7, an outer diameter of the elastic body support section 7 with a smaller inner diameter is formed larger than an inner diameter of the elastic body support section 7 with a larger inner diameter. In addition, the elastic body layer 4 positioned between adjacent elastic body support sections 7 is formed as far as at least a part of a space where the adjacent elastic body support sections 7 overlap with each other in a plan view of the axle spring. The elastic body layer 4 being formed as far as at least a part of a space between the adjacent elastic body support sections 7 means that the part of the space is filled in an entire height direction (up-down direction X) of the space with a rubber-like elastic body. A cross sectional shape of the elastic body layer 4 formed in this manner is an approximate L-shape.

According to the configuration described above, the elastic body layer 4 is formed as far as the elastic body support section 7 which is formed at the shaft section 6 or the hard cylinder 5 in contact with an inner circumferential surface of the elastic body layer 4. In other words, the elastic body layer 4 is supported by the shaft section 6 or the hard cylinder 5 in contact with the inner circumferential surface of the elastic body layer 4 and by the elastic body support section 7. Accordingly, when a load is applied to the axle spring, a compressive load increases and a spring constant becomes larger than an axle spring with a conventional structure in a high load range and superior non-linear spring characteristics are exhibited. In addition, since the elastic body layer 4 is supported by the elastic body support section 7, separation between the outer circumferential surface of the shaft section 6 or the hard cylinder 5 and the elastic body layer 4 or an occurrence of a creep can be suppressed and the risk of adversely affecting durability can be reduced.

In addition, in the present embodiment, since the elastic body layer 4 is formed as far as a space where elastic body support sections 7 facing to each other are formed so as to overlap with each other in a plan view of the axle spring, the compressive load further increases in the high load range and more superior non-linear spring characteristics are exhibited.

A corner section between the shaft section 6, the hard cylinder 5, or the outer cylinder 2 and the elastic body support section 7 formed at a lower end thereof is preferably formed so as to be curved. Accordingly, when a load is applied to the elastic body layer 4, stress can be dispersed and an occurrence of a crack can be suppressed. A lower end position of the hard cylinder 5 in this case will be described using the hard cylinder 5b as an example. Figure 2 is an enlarged view of a portion enclosed by a circle A in Figure 1. In the present invention, a lower end 5b1 of the hard cylinder 5b is assumed to be a point where, in a sectional view of the hard cylinder 5b, a dashed-two dotted line L1 which passes an inner circumferential surface of the hard cylinder 5b and a dashed-two dotted line L2 which passes a lower surface of the elastic body support section 7c intersect with each other. This definition similarly applies to lower ends of the other elastic body support sections 5a and 5c and the outer cylinder 2. In the drawing, a dashed line L3 represents a perpendicular which passes the lower end 5b1 of the hard cylinder 5b.

When the lower ends of the hard cylinders 5a, 5b, and 5c and the outer cylinder 2 are respectively denoted as 5a1, 5b1, 5c1, and 2a1, in consideration of the presence and an elastic deformation of the elastic body layer 4, a relationship among the respective lower ends 5a1, 5b1, 5c1, and 2a1 is set as follows. First, distances from the axial center P to the respective lower ends are expressed as 5a1 < 5b1 < 5c1 < 2a1. In other words, sizes of inner diameters of the respective elastic body support sections are expressed as 7a < 7b < 7c < 7d < 7e. In addition, distances from an upper surface of the elastic body support section 7a to the respective lower ends in the upward direction X1 are expressed as 5a1 < 5b1 < 5c1 < 2a1. In other words, heights of the respective elastic body support sections are expressed as 7a < 7b < 7c < 7d < 7e.

In a conventional axle spring, as shown in Figure 7, lower end positions of the elastic body layers 39a to 39d in contact with the hard cylinders 40a to 40c and the inner circumferential surface of the outer cylinder 38 are higher positions than the lower end positions of the hard cylinders 40a to 40c and the outer cylinder 38. By comparison, in the axle spring according to the present invention, lower end positions of the elastic body layers 4a to 4d in contact with the hard cylinders 5a to 5c and the inner circumferential surface of the outer cylinder 2 are formed so as to extend to the elastic body support sections 7a to 7d which are lower than the lower end positions of the hard cylinders 5a to 5c and the outer cylinder 2.

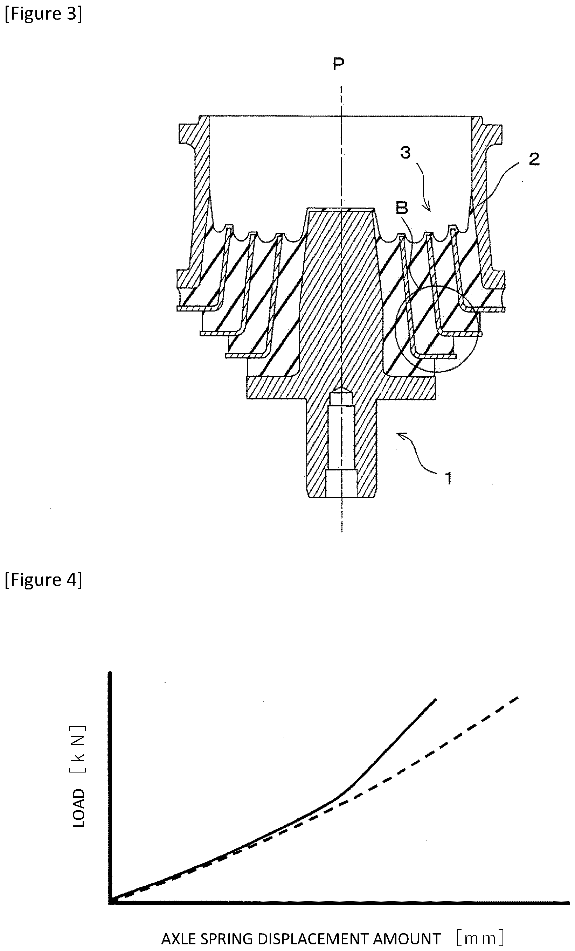

Furthermore, the elastic body layer 4 which is in contact with the lower end of the hard cylinder 5 or the outer cylinder 2 but positioned lower than the lower end position thereof is formed as far as a position more outward in the radial direction than the lower end position of the hard cylinder 5 or the outer cylinder 2 as shown in Figure 2. Accordingly, as shown in Figure 3, when a load is applied to the axle spring according to the present invention, a compressive load increases as compared to an axle spring with a conventional structure as a displacement amount of the axle spring increases and superior non-linear spring characteristics are exhibited.

Figure 4 is a schematic view showing a relationship between a displacement amount of an axle spring in the up-down direction X and a change in a load of the axle spring when using the axle spring according to the present invention shown in Figure 1 and the conventional axle spring shown in Figure 6. In the drawing, a solid line indicates the axle spring according to the present invention and a dashed line indicates the conventional axle spring. As illustrated, the axle spring according to the present invention has a low spring constant at a level equivalent to that of the conventional axle spring in a normal load range (low load range) but a higher spring constant than the conventional axle spring in a high load range. Accordingly, an increase in the displacement amount of the axle spring can be suppressed. In addition, since the elastic body layer 4 is supported by the elastic body support section 7, separation between the outer circumferential surface of the shaft section 6 or the hard cylinder 5 and the elastic body layer 4 or an occurrence of a creep can be suppressed and superior durability can be provided.

In the axle spring according to the present embodiment, as shown in Figure 2, in what kind of load range a high spring constant is to be exhibited can be adjusted by changing a ratio expressed as (D2/D1), where D1 denotes a thickness of the elastic body layer 4 in the radial direction at the lower end position of the hard cylinder 5 or the outer cylinder 2 in contact with the outer circumferential surface of the elastic body layer 4, and D2 denotes a thickness of the elastic body layer 4 in the direction of the axial center P at the lower end position of the hard cylinder 5 or the outer cylinder 2 in contact with the outer circumferential surface of the elastic body layer 4. Specifically, the larger D2/D1 is, the higher a load range to which a rising position of the spring constant can be shifted. In other words, the larger D2/D1 is, the higher the spring constant in the high load range while maintaining the spring constant in the normal load range. In this case, satisfying D2/D1 ≥ 1 is favorable and satisfying D2/D1 ≥ 1.2 is more favorable.

In addition, while an aspect in which the elastic body support section 7 is formed at the lower end of each of the shaft section 6, the hard cylinders 5a to 5c, and the outer cylinder 2 has been described in the present embodiment, the elastic body support section 7 can also be provided at the lower ends of at least two elements facing to each other among the shaft section 6, the hard cylinders 5a to 5c, and the outer cylinder 2. Even in this case, the spring constant of the elastic body layer 4 sandwiched between the elastic body support sections 7 facing to each other can be increased and, at the same time, the risk of adversely affecting durability of the elastic body layer 4 can be reduced.

Furthermore, the elastic body support section 7 can also be provided at the lower end of at least one element among the shaft section 6, the hard cylinders 5a to 5c, and the outer cylinder 2. In this case, the outer diameter of the elastic body support section 7 may be set equal to or larger than an opening diameter of the lower end of the hard cylinder 5 or the outer cylinder 2 to which the shaft section 6 or the hard cylinder 5 where the elastic body support section 7 is formed faces on an outer side in the radial direction, and the elastic body layer 4 may be formed as far as the elastic body support section 7.

The elastic body layer 4 in contact with the outer circumferential surface of the shaft section 6 or the hard cylinder 5, where the elastic body support section 7 is formed, is integrally formed continuously from an upper part of the shaft section 6 or the hard cylinder 5 where the elastic body support section 7 is formed to the elastic body support section 7. In the elastic body layer 4, a thickness in the radial direction of a portion (an elastic body layer 4low) positioned below the lower end of the hard cylinder 5 or the outer cylinder 2 in contact with the outer circumferential surface of the elastic body layer 4 can be appropriately set in accordance with required non-linear spring characteristics. However, in order to increase the spring constant in the high load range, the elastic body layer 4 is preferably formed as far as a position of a perpendicular L3 which passes the lower end of the hard cylinder 5 or the outer cylinder 2 in contact with the outer circumferential surface of the elastic body layer 4 as shown in Figure 2.

This condition need not necessarily be satisfied in an unloaded state. An outer circumferential end surface 4out of the elastic body layer 4low is normally formed as a concave curved surface in consideration of an elastic deformation of the elastic body. The concave curved surface is flattened as shown in Figure 5 due to an elastic deformation of the elastic body layer 4. Therefore, even when a part of the outer circumferential end surface 4out of the elastic body layer 4low is positioned on an inner side of the perpendicular L3 described above when there is no load, the outer circumferential end surface 4out of the elastic body layer 4low may be set so as to reach the position of the perpendicular L3 due to an elastic deformation when a load is applied to the axle spring.

In addition, in the present invention, a configuration may be adopted in which, when a load in the axial center direction is applied to the axle spring, a part of the load is applied to the elastic body support section 7. Specifically, a compressive load may be applied to the elastic body support section 7 when the elastic body layer 4 elastically deforms. Accordingly, an excessive deformation of the elastic body layer 4 can be suppressed and the risk of adversely affecting durability can be reduced.

In this case, while shapes of the elastic body support section 7 and the elastic body layer 4low are not particularly limited and may be formed so that a part of the load (particularly, a load in the high load range) in the axial center direction which is applied to the axle spring is applied to the elastic body support section 7, both a width in the radial direction of the elastic body support section 7 and a thickness in the radial direction of the elastic body layer 4low are preferably equal to or greater than 1/3 of D1 and more preferably equal to or greater than 1/2 of D1. Note that the width in the radial direction of the elastic body support section 7 means (outer diameter - inner diameter)/2 of the elastic body support section 7.

Furthermore, the elastic body support section 7 can be formed so as to be capable of holding the elastic body layer 4 when the shaft section 6 or the hard cylinder 5 where the elastic body support section 7 is formed and the elastic body layer 4 in contact with an outer circumferential surface of the shaft section 6 or the hard cylinder 5 are in a non-adhered state. Accordingly, even when the elastic body layer 4 separates from the outer circumferential surface of the shaft section 6 or the hard cylinder 5 which is in contact with the inner circumferential surface of the elastic body layer 4, the elastic body layer 4 can be prevented from becoming dislodged from the shaft section 6 or the hard cylinder 5. In other words, functionality as an axle spring can be maintained.

In order to determine a shape of the elastic body support section 7 capable of holding the elastic body layer 4 when the shaft section 6 or the hard cylinder 5 where the elastic body support section 7 is formed and the elastic body layer 4 in contact with an outer circumferential surface of the shaft section 6 or the hard cylinder 5 are in a separated state, any one surface among outer circumferential surfaces of the shaft section 6 and the hard cylinder 5 is fabricated in a non-adhered state with respect to the elastic body layer 4 when manufacturing the axle spring. In this case, a plurality of the shaft section 6 or the hard cylinder 5 in a non-adhered state with respect to the elastic body layer 4 are prepared by forming elastic body support sections 7 of various shapes on the shaft section 6 or the hard cylinder 5 to respectively fabricate axle springs with elastic body support sections 7 of different shapes.

In addition, when a predetermined load is loaded to the axle springs by a compression tester, the elastic body support section 7 with a shape capable of holding an elastic body layer can be selected. This selection may be performed with respect to each of the elastic body support sections 7a to 7d. This method is not only used when forming the elastic body support section 7 on the entire shaft section 6 or the entire hard cylinder 5 but also used when forming the elastic body support section 7 on a part of the members of the shaft section 6 or the hard cylinder 5.

While an embodiment of the present invention has been described above, the scope of the present invention is not limited thereto but may be otherwise variously modified without departing from the true spirit of the invention. For example, while an aspect in which the elastic body support section 7 is formed so as to extend in a direction (horizontal direction) which is perpendicular with respect to the axial center P has been described in the present embodiment, the direction of the elastic body support section 7 is not limited thereto and the elastic body support section 7 can also be formed so as to incline downward. In this case, an inclination angle of the elastic body support section 7 with respect to the axial center P is set so as to be larger than an inclination angle of the shaft section 6 or the hard cylinder 5 where the elastic body support section 7 is formed. Since the more gradual the inclination angle of the elastic body support section 7, the lower the spring constant in the high load range, the inclination angle may be appropriately set in accordance with required non-linear spring characteristics.

Constituent elements disclosed in the present embodiment and the modifications described above can be combined with each other and new technical features can be formed by such combinations.

### Reference Signs List

- 1: Shaft core
- 2: Outer cylinder
- 3: Elastic section
- 4: Elastic body layer
- 5: Hard cylinder
- 6: Shaft section
- 7: Elastic body support section
- 8: Shaft base

## Claims

1. An axle spring comprising a shaft core, an outer cylinder, and an elastic section interposed between the shaft core and the outer cylinder, wherein the elastic section has a laminated elastic body structure in which elastic body layers and hard cylinders are alternately concentrically laminated, the shaft core has a shaft section to which the elastic body layers are bonded, an annular elastic body support section which extends outward in a radial direction is formed at a lower end of at least one of the shaft section and the hard cylinders, and the elastic body support section has at least one of configurations (A) and (B) described below:
(A) A configuration in which an outer diameter of the elastic body support section is set equal to or larger than an opening diameter of a lower end of the hard cylinder or the outer cylinder to which the shaft section or the hard cylinder where the elastic body support section is formed faces on an outer side in the radial direction, and the elastic body layer, which is in contact with the outer circumferential surface of the shaft section or the hard cylinders where the elastic body support section is formed, is formed as far as the elastic body support section.
(B) A configuration in which the elastic body layer, which is in contact with the outer circumferential surface of the shaft section or the hard cylinders where the elastic body support section is formed, is formed as far as the elastic body support section and, when a load in an axial center direction is applied to the axle spring, a part of the load is applied to the elastic body support section.

2. The axle spring according to claim 1, wherein the elastic body support section and the elastic body layer in contact with the outer circumferential surface of the shaft section or the hard cylinders where the elastic body support section is formed are formed at least as far as a position of a perpendicular which passes a lower end of the hard cylinders or the outer cylinder in contact with the outer circumferential surface of the elastic body layer.

3. The axle spring according to claim 2, wherein an annular elastic body support section which extends outward in a radial direction is formed at lower ends of at least two elements facing to each other among the shaft section, the hard cylinders, and the outer cylinder, wherein an outer diameter of an elastic body support section with a smaller inner diameter among the elastic body support sections facing to each other is formed so as to be larger than an inner diameter of the elastic body support section with a larger inner diameter, and the elastic body layer is formed as far as at least a part of a space between the elastic body support sections facing to each other.

4. The axle spring according to claim 3, wherein an annular elastic body support section which extends outward in a radial direction is formed at a lower end of each of the shaft section, the hard cylinders, and the outer cylinder, wherein an outer diameter of an elastic body support section with a smaller inner diameter among the elastic body support sections facing to each other is formed so as to be larger than an inner diameter of the elastic body support section with a larger inner diameter, and the elastic body layer is formed as far as at least a part of a space between the elastic body support sections facing to each other.

5. The axle spring according to any one of claims 1 to 4, wherein the elastic body layer in contact with the outer circumferential surface of the shaft section or the hard cylinders where the elastic body support section is formed satisfies a condition expressed as (D2/D1) ≥ 1, where D1 denotes a thickness of the elastic body layer in the radial direction at a lower end position of the hard cylinders or the outer cylinder in contact with the outer circumferential surface of the elastic body layer, and D2 denotes a thickness of the axle spring in the axial center direction at a lower end position of the hard cylinders or the outer cylinder in contact with the outer circumferential surface of the elastic body layer.

6. The axle spring according to any one of claims 1 to 5, wherein the elastic body support section is formed so as to be capable of holding the elastic body layer when the shaft section or the hard cylinders where the elastic body support section is formed and the elastic body layer in contact with an outer circumferential surface of the shaft section or the hard cylinders are in a non-adhered state.

7. The axle spring according to any one of claims 1 to 6, wherein the elastic body support section is formed so as to extend in a direction perpendicular to an axial center of the axle spring.

8. The axle spring according to any one of claims 1 to 7, wherein a corner section, which is between the elastic body support section and the shaft section or the hard cylinders where the elastic body support section is formed, is formed so as to be curved.
